# EUROPÄISCHE PATENTSCHRIFT

(11) **EP 3 698 449 B1**
(45) Veröffentlichungstag und Bekanntmachung des Hinweises auf die Patenterteilung: **05.01.2022**
(21) Anmeldenummer: 17825105.4
(22) Anmeldetag: 22.11.2017
(51) Int. Cl.: H02J 3/36

(54) **ENERGIEÜBERTRAGUNG ÜBER EINE BIPOLARE HOCHSPANNUNGS-GLEICHSTROM-ÜBERTRAGUNGSSTRECKE**
ENERGY TRANSMISSION VIA A BIPOLAR HIGH VOLTAGE DIRECT CURRENT TRANSMISSION LINK
TRANSFERT D'ÉNERGIE PAR UNE VOIE DE TRANSMISSION SOUS HAUTE TENSION CONTINUE BIPOLAIRE

(43) Veröffentlichungstag der Anmeldung: 26.08.2020
(73) Patentinhaber: Siemens Energy Global GmbH & Co. KG, 81739 München (DE)
(72) Erfinder: SÖLLNER, Nicolas, 91058 Erlangen (DE); MESSNER, Johann, 91056 Erlangen (DE)
(86) Internationale Anmeldenummer: PCT/EP2017/080112
(87) Internationale Veröffentlichungsnummer: WO 2019/101307

(56) Entgegenhaltungen:
- EP-A1- 0 290 914
- EP-A1- 0 321 823
- EP-A1- 3 109 463
- DE-A1- 1 588 750
- DE-A1- 2 705 242

## Beschreibung

Die Erfindung betrifft eine Stromrichterstation für eine Energieübertragung über eine bipolare Hochspannungs-Gleichstrom-Übertragungsstrecke und ein Verfahren zu deren Betrieb.

Elektrische Energie zwischen Wechselstromnetzen über große Entfernungen wird häufig mit hoher Gleichspannung übertragen, da die Energieübertragung mit Gleichspannung über große Entfernungen gegenüber einer Energieübertragung mit Wechselspannung verlustärmer und kostengünstiger ist. Diese Art der Energieübertragung wird als Hochspannungs-GleichstromÜbertragung (HGÜ) bezeichnet. Die Energieübertragung kann dabei über eine monopolare oder eine bipolare Hochspannungs-Gleichstrom-Übertragungsstrecke (HGÜ-Strecke) erfolgen. Eine monopolare HGÜ-Strecke weist nur eine Hochspannungsleitung auf, an der eine Hochspannung gegenüber einem Erdpotential anliegt. Eine bipolare HGÜ-Strecke weist zwei Hochspannungsleitungen auf, wobei an einer Hochspannungsleitung eine gegenüber einem Erdpotential positive Hochspannung anliegt und an der anderen Hochspannungsleitung eine gegenüber dem Erdpotential negative Hochspannung anliegt. Die der gleichen Spannungspolarität zugeordneten Teile einer HGÜ-Strecke werden im Folgenden als Pole der HGÜ-Strecke bezeichnet. Eine monopolare HGÜ-Strecke weist somit einen Pol auf, eine bipolare HGÜ-Strecke weist zwei Pole auf.

Aus der europäischen Patentanmeldung EP 0 321 823 A1 ist ein Verfahren und eine Vorrichtung zur Entkoppelung der Wirk- und Blindleistungsregelung bei einer zwei Netze verbindenden Hochspannungs-Gleichstrom-Übertragungsstrecke bekannt. Dabei wird ein an einem Ende der Übertragungsstrecke angeordneter Umrichter als ein Gleichrichter betrieben; ein an dem anderen Ende der Übertragungsstrecke angeordneter Umrichter wird als ein Wechselrichter betrieben. Eine erste Kaskadenregelung zur Vorgabe des Gleichrichtersteuerwinkels besteht aus einem übergeordneten Wirkleistungsregler und einem unterlagerten Gleichstromregler. Eine zweite Kaskadenregelung zur Vorgabe des Wechselrichtersteuerwinkels besteht aus einem übergeordneten Spannungs- oder Blindleistungsregler und einem unterlagerten Löschwinkelregler.

Aus der europäischen Patentanmeldung EP 0 290 914 A1 ist eine Einrichtung zur Hochspannungs-Gleichstromübertragung bekannt, bei der an den beiden Enden der Hochspannungs-Gleichstrom-Übertragungsstrecke je ein Stromrichter und ein dazugehöriger Stromrichtertransformator angekoppelt sind. Dabei ist jeder Stromrichter als Reihenschaltung zweier sechspulsiger Drehstrom-Brückenschaltungen ausgeführt und mit je einem stern- bzw. dreieckförmig geschalteten Wicklungssystem des dazugehörigen Stromrichtertransformators verbunden. Auf diese Weise wird ein zwölfpulsiger Betrieb der Stromrichter ermöglicht.

Die europäische Patentanmeldung EP 3 109 463 A1 offenbart eine Windparkanbindung mit einem seeseitigen Diodengleichrichter, der über einen Transformator mit einem seeseitigen Wechselspannungsnetz verbunden ist. Wechselspannungsseitig des Diodengleichrichters ist eine Filtereinheit angeordnet, die zur Beseitigung von harmonischen Oberschwingungen im Wechselspannungsnetz dient.

Die Schrift DE 15 88 750 A1 offenbart ein Verfahren zur Gleichstromübertragung zwischen mehreren stromgeregelten Gleich- und Wechselrichterstationen. Dabei erfolgt bei jeder Stromrichterstation neben einer Zündwinkelsteuerung zusätzlich eine Amplitudenregelung zur Einhaltung konstanter Steuerwinkel.

Aus der Offenlegungsschrift DE 27 05 242 A1 sind ein Verfahren zur Steuerung des Wirk- und Blindleistungsverhaltens einer Hochspannungs-Gleichstrom-Übertragungsanlage und eine Regelanordnung zur Durchführung des Verfahrens bekannt.

Um eine HGÜ-Strecke mit einem Wechselstromnetz zu verbinden, ist zwischen dem Wechselstromnetz und einem Ende der HGÜ-Strecke eine Stromrichterstation angeordnet, in der die Umwandlung zwischen Wechselstrom und Wechselspannung des Wechselstromnetzes in Gleichstrom und Gleichspannung der HGÜ erfolgt. Stromrichterstationen weisen für jeden mit ihr verbundenen Pol der HGÜ-Strecke einen Stromrichter auf, der häufig als ein netzgeführter Stromrichter (LCC = Line Commutated Converter) auf Thyristorbasis ausgeführt ist. Im Unterschied zu einem selbstgeführten Stromrichter (VSC = Voltage Sourced Converter) benötigt ein netzgeführter Stromrichter zu seinem Betrieb Blindleistung aus dem Wechselstromnetz. Die von einem netzgeführten Stromrichter mit dem Wechselstromnetz ausgetauschte Blindleistung ist prinzipbedingt gemäß einer die Blindleistung mit der Wirkleistung in Beziehung setzenden Kennlinie von der Wirkleistung abhängig, die von dem Stromrichter übertragen wird. Blind- und Wirkleistung können daher bei einem netzgeführten Stromrichter nicht ohne Weiteres unabhängig voneinander eingestellt werden. Insbesondere lassen sich netzgeführte Stromrichter daher ohne Veränderung des Wirkleistungsflusses auch nur sehr eingeschränkt zu einer Blindleistungskompensation im Wechselstromnetz verwenden.

Es gibt zwar Möglichkeiten, durch Modulation des Zündwinkels eines netzgeführten Stromrichters den Blindleistungsaustausch mit dem Wechselstromnetz im Übertragungsbetrieb zu verändern. Hierbei verändern sich jedoch bei gleichbleibender Wechselspannung beziehungsweise Sekundärspannung einer den Stromrichter an das Wechselstromnetz koppelnden Transformatoreinheit zwangsweise auch die gleichstromseitige Spannung des Stromrichters und damit der Wirkleistungsfluss für das gesamte verbundene HGÜ-System. Dies lässt sich zwar in engem Rahmen durch lokales Verfahren der Transformatorsekundärspannung mittels Stufenschaltern kompensieren, jedoch erfolgt der Betrieb des Stromrichters dann in unnatürlichen Betriebspunkten, die eine aufwändige und kostspielige Betriebsmittelauslegung erfordern. Da ein Verfahren der Transformatorspannung außerdem im Sekundenbereich stattfindet, ist eine transiente Reaktion auf Blindleistungsänderungen mit hoher Dynamik hierbei auch nicht möglich.

Der Erfindung liegt die Aufgabe zugrunde, eine insbesondere hinsichtlich des Blindleistungsaustausches mit einem Wechselstromnetz verbesserte Stromrichterstation für eine Energieübertragung über eine bipolare Hochspannungs-Gleichstrom-Übertragungsstrecke und ein hinsichtlich des Blindleistungsaustausches verbessertes Verfahren zu dem Betrieb einer derartigen Stromrichterstation anzugeben.

Die Aufgabe wird erfindungsgemäß durch ein Verfahren mit den Merkmalen des Anspruchs 1 und durch eine Stromrichterstation mit den Merkmalen des Anspruchs 4 gelöst.

Vorteilhafte Ausgestaltungen der Erfindung sind Gegenstand der Unteransprüche.

Bei dem erfindungsgemäßen Verfahren zum Betrieb einer Stromrichterstation mit zwei netzgeführten Stromrichtern für eine Energieübertragung über eine bipolare Hochspannungs-Gleichstrom-Übertragungsstrecke werden die beiden Stromrichter in einer Antiparallelschaltung mit demselben Pol der Hochspannungs-Gleichstrom-Übertragungsstrecke elektrisch verbunden. Einer der Stromrichter wird als Gleichrichter an einem Wechselstromnetz betrieben, der andere Stromrichter wird als Wechselrichter an dem Wechselstromnetz betrieben und eine von der Stromrichterstation mit dem Wechselstromnetz ausgetauschte Stationsblindleistung wird durch Wirkleistungsvorgaben für Stromrichterwirkleistungen gesteuert, die zwischen den Stromrichtern und dem Wechselstromnetz ausgetauscht werden.

Die Erfindung sieht also vor, die beiden Stromrichter der Stromrichterstation in einer Antiparallelschaltung monopolar, das heißt an demselben Pol der HGÜ-Strecke zu betreiben. Einer der Stromrichter wird als Gleichrichter an dem Wechselstromnetz betrieben, das heißt dieser Stromrichter entnimmt Wirkleistung aus dem Wechselstromnetz. Der andere Stromrichter wird als Wechselrichter an dem Wechselstromnetz betrieben, das heißt dieser Stromrichter überträgt Wirkleistung in das Wechselstromnetz. Dabei wird die von der Stromrichterstation mit dem Wechselstromnetz ausgetauschte Stationsblindleistung durch Wirkleistungsvorgaben für Stromrichterwirkleistungen gesteuert, die zwischen den Stromrichtern und dem Wechselstromnetz ausgetauscht werden.

Die Erfindung nutzt aus, dass die Stationswirkleistung, die die Stromrichterstation mit dem Wechselstromnetz austauscht, die Differenz der Stromrichterwirkleistungen der beiden Stromrichter ist, da einer der Stromrichter als Gleichrichter betrieben wird und der andere Stromrichter als Wechselrichter betrieben wird, während die Stationsblindleistung die Summe der Stromrichterblindleistungen ist. Da außerdem jede Stromrichterblindleistung gemäß einer Kennlinie von der jeweiligen Stromrichterwirkleistung abhängt, kann die Stationsblindleistung durch Änderungen der Stromrichterwirkleistungen der beiden Stromrichter geändert und gesteuert werden, ohne die Stationswirkleistung zu ändern. Beispielsweise kann die Stationsblindleistung erhöht werden, indem die Stromrichterwirkleistungen für Gleich- und Wechselrichter um denselben Betrag erhöht werden, ohne dass sich die Stationswirkleistung ändert. Daher kann durch geeignete Wirkleistungsvorgaben für die Stromrichterwirkleistungen neben der Stationswirkleistung auch eine Stationsblindleistung der Stromrichterstation eingestellt werden.

Die Erfindung ermöglicht also neben dem herkömmlichen Betriebsmodus der Stromrichterstation, in dem die netzgeführten Stromrichter beide als Gleich- oder als Wechselrichter und an verschiedenen Polen der HGÜ-Strecke betrieben werden, einen weiteren Betriebsmodus, in dem mit den Stromrichtern parallel zur HGÜ noch eine Netzsystemdienstleistung der Blindleistungskompensation erbracht wird, ähnlich wie mit selbstgeführten Stromrichtern oder einem Blindleistungskompensator (SVC = Static Var Compensator).

Eine Ausgestaltung der Erfindung sieht vor, dass ein Blindleistungssollwert für die Stationsblindleistung vorgegeben wird und durch die Wirkleistungsvorgaben eine Summe von Stromrichterblindleistungen, die von den Stromrichtern mit dem Wechselstromnetz ausgetauscht werden, auf den Blindleistungssollwert eingestellt wird. Dies ermöglicht, die Stationsblindleistung durch die Wirkleistungsvorgaben für die Stromrichterwirkleistungen der Stromrichter auf einen Sollwert einzustellen.

Die Erfindung sieht vor, dass ein Wirkleistungssollwert einer zwischen der Stromrichterstation und dem Wechselstromnetz ausgetauschten Stationswirkleistung vorgegeben wird und die Wirkleistungsvorgaben eine Differenz der Stromrichterwirkleistungen auf den Wirkleistungssollwert einstellen. Dies ermöglicht, eine gewünschte Stationswirkleistung durch die Wirkleistungsvorgaben für die Stromrichterwirkleistungen der Stromrichter einzustellen.

Eine weitere Ausgestaltung der Erfindung sieht vor, dass ein durch ein Zuschalten oder Abschalten wenigstens eines Wechselstromfilters an einem Netzanschluss der Stromrichterstation an das Wechselstromnetz verursachter Blindleistungssprung der Stationsblindleistung durch eine dem Blindleistungssprung entgegenwirkende Änderung der Stromrichterwirkleistungen zum Zeitpunkt des Zuschaltens oder Abschaltens des wenigstens einen Wechselstromfilters reduziert wird. Durch das Zuschalten und Abschalten von Wechselstromfiltern an dem Netzanschluss kann ein Offset des Blindleistungsaustausches zwischen der Stromrichterstation und dem Wechselstromnetz geändert werden. Ohne weitere Maßnahmen verursacht das Zuschalten und Abschalten von Wechselstromfiltern jedoch einen Blindleistungssprung der Stationsblindleistung. Die vorgenannte Ausgestaltung des erfindungsgemäßen Verfahrens sieht vor, diesen Blindleistungssprung durch eine Änderung der Stromrichterwirkleistungen zum Zeitpunkt des Zuschaltens oder Abschaltens zu reduzieren. Auch diese Ausgestaltung der Erfindung nutzt aus, dass der entgegensetzte Betrieb der Stromrichter es ermöglicht, die Stationsblindleistung durch die Stromrichterwirkleistungen zu beeinflussen, ohne dabei die Stationswirkleistung zu ändern.

Eine erfindungsgemäße Stromrichterstation für eine Energieübertragung über eine bipolare Hochspannungs-Gleichstrom-Übertragungsstrecke umfasst zwei netzgeführte Stromrichter, die jeweils wahlweise als ein Gleichrichter oder als ein Wechselrichter an einem Wechselstromnetz betreibbar und mit jedem der beiden Pole der Hochspannungs-Gleichstrom-Übertragungsstrecke elektrisch verbindbar sind. Ferner weist die Stromrichterstation eine Steuereinheit auf, die eingerichtet ist, eine von der Stromrichterstation mit dem Wechselstromnetz ausgetauschte Stationsblindleistung durch Wirkleistungsvorgaben für Stromrichterwirkleistungen, die zwischen den Stromrichtern und dem Wechselstromnetz ausgetauscht werden, zu steuern, wenn beide Stromrichter in einer Antiparallelschaltung mit demselben Pol der Hochspannungs-Gleichstrom-Übertragungsstrecke verbunden sind.

Eine erfindungsgemäße Stromrichterstation ermöglicht die Durchführung des erfindungsgemäßen Verfahrens mit den oben genannten Vorteilen. Gegenüber einer herkömmlichen Stromrichterstation mit netzgeführten Stromrichtern werden lediglich eine Schaltung, die die Antiparallelisierung der beiden Stromrichter ermöglicht, sowie eine Steuereinheit, die zur erfindungsgemäßen Steuerung der Stromrichterwirkleistungen der antiparallel geschalteten Stromrichter eingerichtet ist, benötigt. Für die Schaltung können gegebenenfalls bereits vorhandene Schaltvorrichtungen einer Stromrichterstation verwendet werden, wobei erforderlichenfalls ein Isolationspegel dieser Schaltvorrichtungen auf ein Hochspannungspotential erhöht werden muss. Die Einrichtung der Steuereinheit kann beispielsweise durch eine entsprechende Programmierung realisiert werden. Daher ist der zusätzliche Hardwareaufwand für eine erfindungsgemäße Stromrichterstation gegenüber einer herkömmlichen Stromrichterstation mit netzgeführten Stromrichtern relativ gering. Die Erfindung kann daher gegebenenfalls auch zur Aufrüstung existierender bipolarer Stromrichterstationen mit netzgeführten Stromrichtern genutzt werden.

Eine Ausgestaltung einer erfindungsgemäßen Stromrichterstation sieht vor, dass jeder Stromrichter mit einem Pol der Hochspannungs-Gleichstrom-Übertragungsstrecke direkt verbunden ist und mit dem anderen Pol durch einen Polwendeschalter verbindbar ist. Diese Ausgestaltung der Erfindung ist besonders vorteilhaft, wenn die Stromrichterstation mit mehr als einer weiteren Stromrichterstation über eine HGÜ-Strecke verbunden ist (so genannter Multiterminal-Betrieb), da in diesem Fall eine einfache Umpolung der HGÜ-Strecke nicht möglich ist und daher oftmals Polwendeschalter ohnehin vorgesehen sind.

Eine weitere Ausgestaltung der Erfindung sieht vor, dass das Wechselstromnetz dreiphasig ist. In diesem Fall kann jeder Stromrichter beispielsweise zwölf in einer aus zwei Sechspuls-Brückenschaltungen bestehenden Zwölfpuls-Brückenschaltung angeordnete Ventileinheiten aufweisen, wobei jede Ventileinheit insbesondere wenigstens einen Thyristor aufweisen kann. Ferner kann dabei jeder Stromrichter durch eine Transformatoreinheit mit dem Wechselstromnetz verbunden sein, die für jede Phase des Wechselstromnetzes eine Primärwicklung, eine erste Sekundärwicklung und eine zweite Sekundärwicklung aufweist, wobei die Primärwicklungen durch eine Sternschaltung miteinander verbunden sind, die ersten Sekundärwicklungen durch eine Dreieckschaltung miteinander verbunden sind und die zweiten Sekundärwicklungen durch eine Sternschaltung miteinander verbunden sind. Bei einer derartigen Ausbildung der Stromrichter ist vorzugsweise jedes Wicklungsende jeder ersten Sekundärwicklung mit einer ersten Sechspuls-Brückenschaltung eines Stromrichters verbunden und/oder ein von einem Sternpunkt der Sternschaltung abgewandtes Wicklungsende jeder zweiten Sekundärwicklung ist mit einer zweiten Sechspuls-Brückenschaltung eines Stromrichters verbunden. Die vorgenannten Ausgestaltungen der Erfindung beziehen sich auf die vorherrschende Ausbildung von HGÜ-Strecken zwischen dreiphasigen Wechselstromnetzen. In diesen Fällen haben sich insbesondere Stromrichterstationen mit zwölfpulsigen Stromrichtern und den weiteren vorgenannten Eigenschaften bewährt, die daher auch vorteilhafte Ausgestaltungen der vorliegenden Erfindung darstellen. Es sei jedoch betont, dass die Erfindung nicht auf dreiphasige Wechselstromnetze und/oder Stromrichter der vorgenannten Art eingeschränkt ist, sondern beispielsweise auch für einphasige Wechselstromnetze und/oder sechspulsige Stromrichter anwendbar ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen Schaltplan einer Stromrichterstation gemäß dem Stand der Technik,
FIG 2 schematisch drei Stromrichterstationen, die über eine HGÜ-Strecke verbunden sind,
FIG 3 einen Netzanschluss einer Stromrichterstation an ein Wechselstromnetz,
FIG 4 eine erste Ausführungsform eines Wechselstromfilters,
FIG 5 eine zweite Ausführungsform eines Wechselstromfilters,
FIG 6 eine dritte Ausführungsform eines Wechselstromfilters.

Einander entsprechende Teile sind in den Figuren mit den gleichen Bezugszeichen versehen.

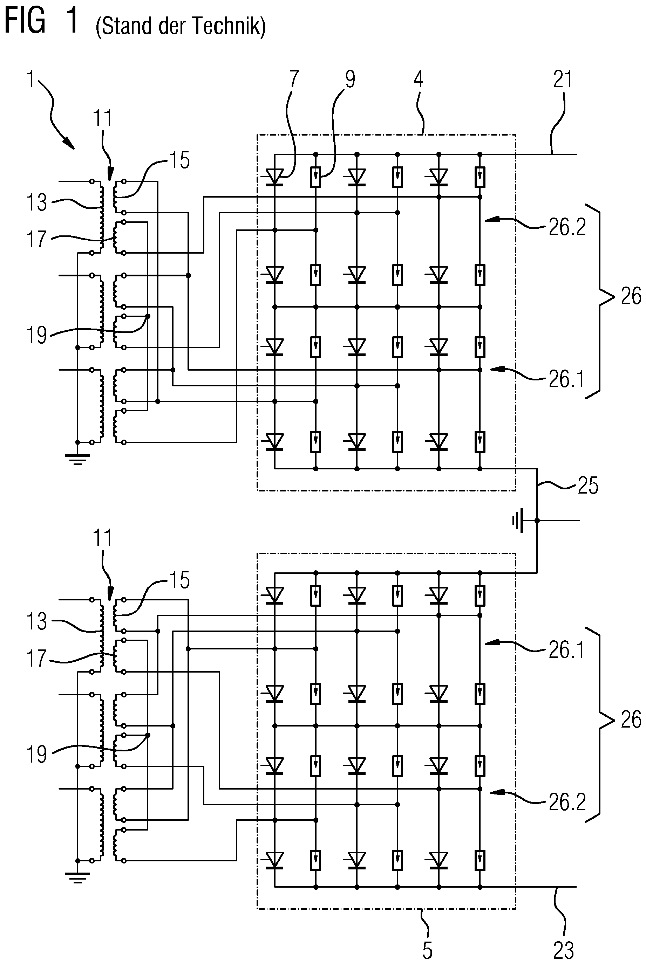

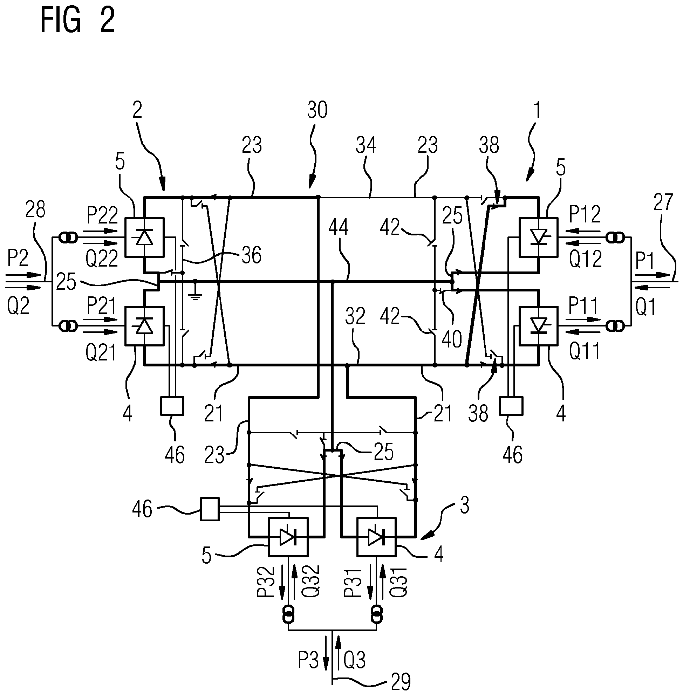

Figur 1 zeigt einen Schaltplan einer Stromrichterstation 1 gemäß dem Stand der Technik für eine Energieübertragung über eine bipolare HGÜ-Strecke 30. Die Stromrichterstation 1 umfasst zwei netzgeführte Stromrichter 4, 5 (LCC = Line Commutated Converter), die jeweils wahlweise als ein Gleichrichter oder als ein Wechselrichter an einem dreiphasigen Wechselstromnetz 27, 28, 29 betreibbar sind. Die bipolare HGÜ-Strecke 30 und die dreiphasigen Wechselstromnetze 27, 28 und 29 sind in Figur 2 dargestellt.

Jeder Stromrichter 4, 5 weist zwölf Ventileinheiten 7 auf, die in einer aus zwei Sechspuls-Brückenschaltungen 26.2, 26.2 bestehenden Zwölfpuls-Brückenschaltung 26 angeordnet sind. Jede Ventileinheit 7 weist einen Thyristor oder mehrere in Reihe oder parallel geschaltete Thyristoren auf. Zu jeder Ventileinheit 7 ist ein Überspannungsableiter 9 parallel geschaltet.

Jeder Stromrichter 4, 5 ist durch eine Transformatoreinheit 11 mit dem Wechselstromnetz 27 verbunden, die für jede Phase des Wechselstromnetzes 27 eine Primärwicklung 13, eine erste Sekundärwicklung 15 und eine zweite Sekundärwicklung 17 aufweist. Die Primärwicklungen 11 jeder Transformatoreinheit 11 sind durch eine Sternschaltung miteinander verbunden, die ersten Sekundärwicklungen 15 sind durch eine Dreieckschaltung miteinander verbunden und die zweiten Sekundärwicklungen 17 sind durch eine Sternschaltung miteinander verbunden.

Jedes Wicklungsende jeder ersten Sekundärwicklung 15 ist mit einer von sechs Ventileinheiten 7 gebildeten ersten Sechspuls-Brückenschaltung 26.1 verbunden. Ein von einem Sternpunkt 19 der Sternschaltung abgewandtes Wicklungsende jeder zweiten Sekundärwicklung 17 ist mit einer von den anderen sechs Ventileinheiten 7 des jeweiligen Stromrichter 4, 5 gebildeten zweiten Sechspuls-Brückenschaltung 26.2 verbunden.

Ein erster Stromrichter 4 ist mit einem ersten Pol 21 der HGÜ-Strecke 30 verbunden. Dazu ist die zweite Sechspuls-Brückenschaltung 26.2 des ersten Stromrichters 4 mit dem ersten Pol 21 der HGÜ-Strecke 30 verbunden. Der zweite Stromrichter 5 ist mit dem zweiten Pol 23 der HGÜ-Strecke 30 verbunden. Dazu ist die zweite Sechspuls-Brückenschaltung 26.2 des zweiten Stromrichters 5 mit dem zweiten Pol 23 der HGÜ-Strecke 30 verbunden. Ferner sind die beiden Stromrichter 4, 5 über eine auf Mittelspannung ausgelegte Stromrichterverbindungsleitung 25 miteinander verbunden. Dazu sind die ersten Sechspuls-Brückenschaltungen 26.1 beider Stromrichter 4, 5 mit der Stromrichterverbindungsleitung 25 verbunden.

Figur 2 zeigt schematisch drei Stromrichterstationen 1, 2, 3, die gleichstromseitig miteinander über eine HGÜ-Strecke 30 verbunden sind. Wechselstromseitig ist eine erste Stromrichterstation 1 mit einem ersten Wechselstromnetz 27 verbunden, eine zweite Stromrichterstation 2 ist mit einem zweiten Wechselstromnetz 28 verbunden, und eine dritte Stromrichterstation 3 ist mit einem dritten Wechselstromnetz 29 verbunden.

Die HGÜ-Strecke 30 ist bipolar mit einem ersten Pol 21 und einem zweiten Pol 23 ausgebildet. Die Stromrichterstationen 1, 2, 3 sind über Hochspannungsleitungen 32, 34 der HGÜ-Strecke 30 miteinander verbunden.

Jede Stromrichterstation 1, 2, 3 ist wie die in Figur 1 dargestellte Stromrichterstation 1 ausgebildet, wobei jeder der beiden Stromrichter 4, 5 jeder Stromrichterstation 1, 2, 3 wahlweise mit jedem der beiden Pole 21, 23 der HGÜ-Strecke 30 verbindbar ist. Dazu sind die mit jeweils einem Pol 21, 23 verbundenen Ausgänge jeder Stromrichterstation 1, 2, 3 über eine Polverbindungsleitung 36 und zwei Polwendeschalter 38 miteinander verbindbar. Die Polverbindungsleitung 36 jeder Stromrichterstation 1, 2, 3 ist ferner über einen Umkonfigurationsschalter 40 mit der Stromrichterverbindungsleitung 25 der Stromrichterstation 1, 2, 3 verbindbar und weist zwischen ihrer Verbindung mit dem Umkonfigurationsschalter 40 und jedem Stromrichter 4, 5 der Stromrichterstation 1, 2, 3 einen Unterbrechungsschalter 42 auf. Die Stromrichterverbindungsleitungen 25 der Stromrichterstationen 1, 2, 3 sind über Mittelspannungsleitungen 44 miteinander verbunden. Jede Stromrichterstation 1, 2, 3 weist eine Steuereinheit 46 auf, durch die die Ventileinheiten 7 ihrer Stromrichter 4, 5 angesteuert werden.

Jede Stromrichterstation 1, 2, 3 tauscht mit dem Wechselstromnetz 27, 28, 29, mit dem sie verbunden ist, eine Stationswirkleistung P1, P2, P3 und eine Stationsblindleistung Q1, Q2, Q3 aus, wobei Pi und Qi die Stationswirkleistung und die Stationsblindleistung der Stromrichterstation i bezeichnen (für i = 1, 2, 3). Dabei ergibt sich die Stationswirkleistung Pi der Stromrichterstation i aus der Stromrichterwirkleistung Pi1 des ersten Stromrichters 4 der Stromrichterstation i und der Stromrichterwirkleistung Pi2 des zweiten Stromrichters 5 der Stromrichterstation i. Entsprechend ergibt sich die Stationsblindleistung Qi der Stromrichterstation i aus der Stromrichterblindleistung Qi1 des ersten Stromrichters 4 der Stromrichterstation i und der Stromrichterblindleistung Qi2 des zweiten Stromrichters 5 der Stromrichterstation i. Die Richtung jedes Wirk- und Blindleistungsflusses ist in Figur 2 durch einen Pfeil dargestellt.

Eine erste Stromrichterstation 1 wird gemäß dem erfindungsgemäßen Verfahren betrieben. Dabei werden die beiden Stromrichter 4, 5 der ersten Stromrichterstation 1 in einer Antiparallelschaltung mit demselben Pol 21, 23 der HGÜ-Strecke 30 verbunden. Einer der Stromrichter 4, 5 der ersten Stromrichterstation 1 wird als Gleichrichter betrieben, der andere Stromrichter 4, 5 der ersten Stromrichterstation 1 wird als Wechselrichter betrieben. Die erste Stromrichterstation 1 wird also monopolar, das heißt nur an einem Pol 21, 23 der HGÜ-Strecke 30, betrieben. Wie im Folgenden eingehender erläutert wird, ermöglicht dies, gemäß dem erfindungsgemäßen Verfahren die Stationsblindleistung Q1 mittels der Steuereinheit 46 der ersten Stromrichterstation 1 durch Wirkleistungsvorgaben für die Stromrichterwirkleistungen P11 und P12 zu steuern.

In dem dargestellten Beispiel werden die beiden Stromrichter 4, 5 der ersten Stromrichterstation 1 mit einem ersten Pol 21 der HGÜ-Strecke 30 elektrisch verbunden, wobei der erste Stromrichter 4 der ersten Stromrichterstation 1 direkt mit dem ersten Pol 21 verbunden ist, während der zweite Stromrichter 5 der ersten Stromrichterstation 1 durch einen Polwendeschalter 38 mit dem ersten Pol 21 verbunden wird. Der erste Stromrichter 4 wird als Wechselrichter betrieben, das heißt er überträgt die Stromrichterwirkleistung P11 in das erste Wechselstromnetz 27. Der zweite Stromrichter 5 wird als Gleichrichter betrieben, das heißt er entnimmt die Stromrichterwirkleistung P12 aus dem ersten Wechselstromnetz 27. In dem dargestellten Beispiel ist angenommen, dass P11 größer als P12 ist, so dass die erste Stromrichterstation 1 die Stationswirkleistung P1 = P11 - P12 in das erste Wechselstromnetz 27 überträgt. Die von dem ersten Stromrichter 4 mit dem ersten Wechselstromnetz 27 ausgetauschte Stromrichterblindleistung Q11 und die von dem zweiten Stromrichter 5 mit dem ersten Wechselstromnetz 27 ausgetauschte Stromrichterblindleistung Q12 addieren sich zu der Stationsblindleistung Q1 = Q11 + Q12, die von der ersten Stromrichterstation 1 mit dem ersten Wechselstromnetz 27 ausgetauscht wird.

Da die von jedem der beiden Stromrichter 4, 5 mit dem ersten Wechselstromnetz 27 ausgetauschte Stromrichterblindleistung Q11, Q12 gemäß einer Kennlinie von der von diesem Stromrichter 4, 5 übertragenen Stromrichterwirkleistung P11, P12 abhängt, kann die von der ersten Stromrichterstation 1 mit dem ersten Wechselstromnetz 27 ausgetauschte Stationsblindleistung Q1 bei vorgegebener Stationswirkleistung P1 durch Wirkleistungsvorgaben für die Stromrichterwirkleistungen P11, P12 der Stromrichter 4, 5 der ersten Stromrichterstation 1 gesteuert werden. Beispielsweise kann die Stationsblindleistung Q1 erhöht werden, indem die Stromrichterwirkleistungen P11, P12 erhöht werden, ohne dass sich die Stationswirkleistung P1 ändert. Dies wird durch den unterschiedlichen Betrieb der antiparallel geschalteten Stromrichter 4, 5 als Wechselrichter und Gleichrichter ermöglicht. Erfindungsgemäß werden ein Wirkleistungssollwert der Stationswirkleistung P1 und ein Blindleistungssollwert der Stationsblindleistung Q1 vorgegeben und die Stationswirkleistung P1 und die Stationsblindleistung Q1 werden durch Wirkleistungsvorgaben für die Stromrichterwirkleistungen P11 und P12 auf ihren jeweiligen Sollwert eingestellt, wobei die Wirkleistungsvorgaben die Differenz der Stromrichterwirkleistungen P11 und P12 auf den Wirkleistungssollwert und die Summe der Stromrichterblindleistungen Q11 und Q12 auf den Blindleistungssollwert einstellen.

Eine zweite Stromrichterstation 2 und die dritte Stromrichterstation 3 werden jeweils konventionell betrieben, das heißt die beiden Stromrichter 4, 5 jeder dieser Stromrichterstationen 2, 3 sind mit unterschiedlichen Polen 21, 23 der HGÜ-Strecke 30 verbunden und beide Stromrichter 4, 5 werden entweder als Gleichrichter oder als Wechselrichter betrieben.

In dem dargestellten Beispiel werden die beiden Stromrichter 4, 5 der zweiten Stromrichterstation 2 als Gleichrichter betrieben, die jeweils eine Stromrichterwirkleistung P21 und P22 aus dem zweiten Wechselstromnetz 28 entnehmen. Die zweite Stromrichterstation 2 entnimmt daher die Stationswirkleistung P2 = P21 + P22 aus dem zweiten Wechselstromnetz 28. Die Stromrichterblindleistungen Q21 und Q22 der Stromrichter 4, 5 der zweiten Stromrichterstation 2 addieren sich zu der Stationsblindleistung Q2 = Q21 + Q22, die von der zweiten Stromrichterstation 2 mit dem zweiten Wechselstromnetz 28 ausgetauscht wird.

Die beiden Stromrichter 4, 5 der dritten Stromrichterstation 3 werden als Wechselrichter betrieben, die jeweils eine Stromrichterwirkleistung P31 und P32 in das dritte Wechselstromnetz 29 übertragen. Die dritte Stromrichterstation 3 überträgt daher die Stationswirkleistung P3 = P31 + P32 in das dritte Wechselstromnetz 29. Die Stromrichterblindleistungen Q31 und Q32 der Stromrichter 4, 5 der dritten Stromrichterstation 3 addieren sich zu der Stationsblindleistung Q3 = Q31 + Q32, die von der dritten Stromrichterstation 3 mit dem dritten Wechselstromnetz 29 ausgetauscht wird.

Die Erfindung ermöglicht daher für die Stromrichterstationen 1, 2, 3 neben dem konventionellen Betriebsmodus, in welchem in dem in Figur 2 gezeigten Beispiel die zweite Stromrichterstation 2 und die dritte Stromrichterstation 3 betrieben werden, einen weiteren Betriebsmodus, in welchem in diesem Beispiel die erste Stromrichterstation 1 betrieben wird und welcher zusätzlich und parallel zu der HGÜ noch eine Blindleistungsteuerung der Stationsblindleistung Q1 ermöglicht.

Eine Weitergestaltung des erfindungsgemäßen Verfahrens bezieht sich auf das Zuschalten oder Abschalten von Wechselstromfiltern 54 an einem Netzanschluss 50 einer Stromrichterstation 1, 2, 3 an ein Wechselstromnetz 27, 28, 29.

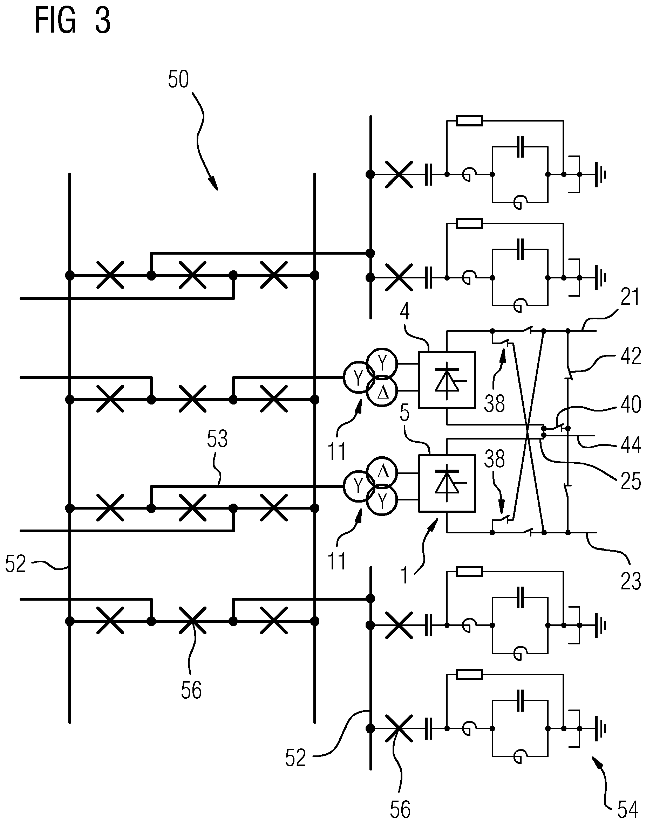

Figur 3 zeigt ein Ausführungsbeispiel eines Netzanschlusses 50 einer Stromrichterstation 1 an ein Wechselstromnetz 27. Die Stromrichterstation 1 ist wie eine der in Figur 2 gezeigten Stromrichterstationen 1, 2, 3 ausgebildet. Der Netzanschluss 50 weist mehrere Sammelschienen 52, Sammelschienenabgänge 53 und Wechselstromfilter 54 auf, die miteinander durch Leistungsschalter 56 verschaltbar sind. Durch das Zuschalten und Abschalten von Wechselstromfiltern 54 kann ein Offset des Blindleistungsaustausches zwischen der Stromrichterstation 1 und dem Wechselstromnetz 27 geändert werden. Die oben genannte Weitergestaltung des erfindungsgemäßen Verfahrens sieht vor, dass ein Blindleistungssprung der Stationsblindleistung Q1, der durch ein Zuschalten oder Abschalten wenigstens eines Wechselstromfilters 54 verursacht wird, durch eine dem Blindleistungssprung entgegenwirkende Änderung der Stromrichterwirkleistungen P11, P12 der Stromrichter 4, 5 der Stromrichterstation 1 zum Zeitpunkt des Zuschaltens oder Abschaltens des wenigstens einen Wechselstromfilters 54 reduziert wird. Mit anderen Worten wird die Stationsblindleistung Q1 der Stromrichterstation 1 zum Zeitpunkt des Zuschaltens oder Abschaltens des wenigstens einen Wechselstromfilters 54 durch eine Änderung der Stromrichterwirkleistungen P11, P12 derart geändert, dass diese Änderung den Blindleistungssprung wenigstens teilweise kompensiert.

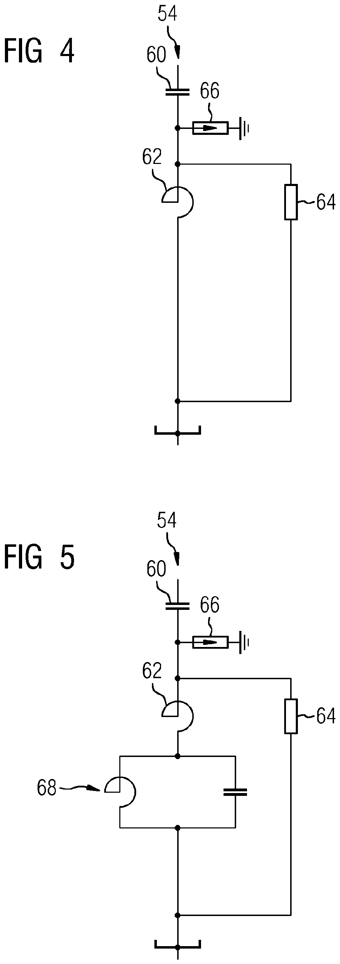

Die Figuren 4 bis 6 zeigen Schaltpläne verschiedener Ausführungsformen von Wechselstromfiltern 54, die an einem Netzanschluss 50 verwendet werden können.

Figur 4 zeigt einen Wechselstromfilter 54 mit einem Kondensator 60 und einer zu dem Kondensator 60 in Reihe geschalteten Parallelschaltung einer Spule 62 und eines Widerstands 64. Der Wechselstromfilter 54 weist außerdem einen geerdeten Filterüberspannungsableiter 66 auf.

Figur 5 zeigt einen Wechselstromfilter 54, der sich von dem in Figur 4 gezeigten Wechselstromfilter 54 nur dadurch unterscheidet, dass eine Reihenschaltung einer Spule 62 und eines Schwingkreises 68 parallel zu dem Widerstand 64 geschaltet ist.

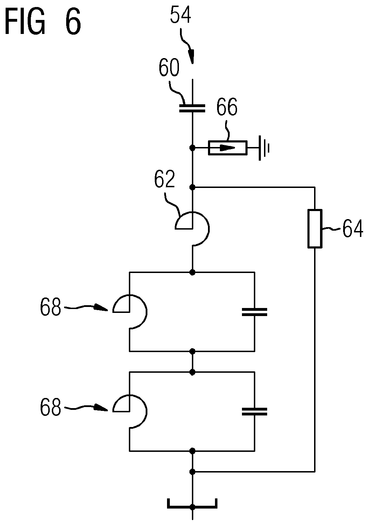

Figur 6 zeigt einen Wechselstromfilter 54, der sich von dem in Figur 4 gezeigten Wechselstromfilter 54 nur dadurch unterscheidet, dass eine Reihenschaltung einer Spule 62 und zweier Schwingkreise 68 parallel zu dem Widerstand 64 geschaltet ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1 bis 3: Stromrichterstation
- 4, 5: Stromrichter
- 7: Ventileinheit
- 9: Überspannungsableiter
- 11: Transformatoreinheit
- 13: Primärwicklung
- 15, 17: Sekundärwicklung
- 19: sekundärseitiger Sternpunkt
- 21, 23: Pol
- 25: Stromrichterverbindungsleitung
- 26: Zwölfpuls-Brückenschaltung
- 26.1, 26.2: Sechspuls-Brückenschaltung
- 27 bis 29: Wechselstromnetz
- 30: Hochspannungs-Gleichstrom-Übertragungsstrecke
- 32, 34: Hochspannungsleitung
- 36: Polverbindungsleitung
- 38: Polwendeschalter
- 40: Umkonfigurationsschalter
- 42: Unterbrechungsschalter
- 44: Mittelspannungsleitung
- 46: Steuereinheit
- 50: Netzanschluss
- 52: Sammelschiene
- 53: Sammelschienenabgang
- 54: Wechselstromfilter
- 56: Leistungsschalter
- 60: Kondensator
- 62: Spule
- 64: Widerstand
- 66: Filterüberspannungsableiter
- 68: Schwingkreis
- P1 bis P3: Stationswirkleistung
- P11 bis P32: Stromrichterwirkleistung
- Q1 bis Q3: Stationsblindleistung
- Q11 bis Q32: Stromrichterblindleistung

## Patentansprüche

1. Verfahren zum Betrieb einer Stromrichterstation (1) mit zwei netzgeführten Stromrichtern (4, 5) für eine Energieübertragung über eine bipolare Hochspannungs-Gleichstrom-Übertragungsstrecke (30),
**dadurch gekennzeichnet, dass**
- die beiden Stromrichter (4, 5) in einer Antiparallelschaltung mit demselben Pol (21, 23) der Hochspannungs-Gleichstrom-Übertragungsstrecke (30) elektrisch verbunden werden,
- einer der Stromrichter (4, 5) als Gleichrichter an einem Wechselstromnetz (27) betrieben wird,
- der andere Stromrichter (4, 5) als Wechselrichter an dem Wechselstromnetz (27) betrieben wird und
- eine von der Stromrichterstation (1) mit dem Wechselstromnetz (27) ausgetauschte Stationsblindleistung (Q1) durch Wirkleistungsvorgaben für Stromrichterwirkleistungen (P11, P12), die zwischen den Stromrichtern (4, 5) und dem Wechselstromnetz (27) ausgetauscht werden, gesteuert wird, wobei
- ein Wirkleistungssollwert einer zwischen der Stromrichterstation (1) und dem Wechselstromnetz (27) ausgetauschten Stationswirkleistung (P1) vorgegeben wird und die Wirkleistungsvorgaben eine Differenz der Stromrichterwirkleistungen (P11, P12) auf den Wirkleistungssollwert einstellen.

2. Verfahren nach Anspruch 1,
**dadurch gekennzeichnet, dass**
ein Blindleistungssollwert für die Stationsblindleistung (Q1) vorgegeben wird und durch die Wirkleistungsvorgaben eine Summe von Stromrichterblindleistungen (Q11, Q12), die von den Stromrichtern (4, 5) mit dem Wechselstromnetz (27) ausgetauscht werden, auf den Blindleistungssollwert eingestellt wird.

3. Verfahren nach einem der vorhergehenden Ansprüche,
**dadurch gekennzeichnet, dass**
ein durch ein Zuschalten oder Abschalten wenigstens eines Wechselstromfilters (54) an einem Netzanschluss (50) der Stromrichterstation (1) an das Wechselstromnetz (27) verursachter Blindleistungssprung der Stationsblindleistung (Q1) durch eine dem Blindleistungssprung entgegenwirkende Änderung der Stromrichterwirkleistungen (P11, P12) zum Zeitpunkt des Zuschaltens oder Abschaltens des wenigstens einen Wechselstromfilters (54) reduziert wird.

4. Stromrichterstation (1) für eine Energieübertragung über eine bipolare Hochspannungs-Gleichstrom-Übertragungsstrecke (30), die Stromrichterstation (1) umfassend
- zwei netzgeführte Stromrichter (4, 5), die jeweils wahlweise als ein Gleichrichter oder als ein Wechselrichter an einem Wechselstromnetz (27) betreibbar und mit jedem der beiden Pole (21, 23) der Hochspannungs-Gleichstrom-Übertragungsstrecke (30) elektrisch verbindbar sind,
**gekennzeichnet durch**
- eine Steuereinheit (46), die eingerichtet ist, eine von der Stromrichterstation (1) mit dem Wechselstromnetz (27) ausgetauschte Stationsblindleistung (Q1) durch Wirkleistungsvorgaben für Stromrichterwirkleistungen (P11, P12), die zwischen den Stromrichtern (4, 5) und dem Wechselstromnetz (27) ausgetauscht werden, zu steuern, wenn beide Stromrichter (4, 5) in einer Antiparallelschaltung mit demselben Pol (21, 23) der Hochspannungs-Gleichstrom-Übertragungsstrecke (30) verbunden sind,
- wobei ein Wirkleistungssollwert einer zwischen der Stromrichterstation (1) und dem Wechselstromnetz (27) ausgetauschten Stationswirkleistung (P1) vorgegeben ist und die Wirkleistungsvorgaben eine Differenz der Stromrichterwirkleistungen (P11, P12) auf den Wirkleistungssollwert einstellen.

5. Stromrichterstation (1) nach Anspruch 4,
**dadurch gekennzeichnet, dass**
jeder Stromrichter (4, 5) mit einem Pol (21, 23) der Hochspannungs-Gleichstrom-Übertragungsstrecke (30) direkt verbunden ist und mit dem anderen Pol (21, 23) durch einen Polwendeschalter (38) verbindbar ist.

6. Stromrichterstation (1) nach Anspruch 4 oder 5,
**dadurch gekennzeichnet, dass**
das Wechselstromnetz (27) dreiphasig ist.

7. Stromrichterstation (1) nach Anspruch 6,
**dadurch gekennzeichnet, dass** jeder Stromrichter (4, 5) zwölf in einer aus zwei Sechspuls-Brückenschaltungen (26.1, 26.2) bestehenden Zwölfpuls-Brückenschaltung (26) angeordnete Ventileinheiten (7) aufweist.

8. Stromrichterstation (1) nach Anspruch 7,
**dadurch gekennzeichnet, dass** jede Ventileinheit (7) wenigstens einen Thyristor aufweist.

9. Stromrichterstation (1) nach einem der Ansprüche 6 bis 8,
**dadurch gekennzeichnet, dass**
jeder Stromrichter (4, 5) durch eine Transformatoreinheit (11) mit dem Wechselstromnetz (27) verbunden ist, die für jede Phase des Wechselstromnetzes (27) eine Primärwicklung (13), eine erste Sekundärwicklung (15) und eine zweite Sekundärwicklung (17) aufweist, wobei die Primärwicklungen (13) durch eine Sternschaltung miteinander verbunden sind, die ersten Sekundärwicklungen (15) durch eine Dreieckschaltung miteinander verbunden sind und die zweiten Sekundärwicklungen (17) durch eine Sternschaltung miteinander verbunden sind.

10. Stromrichterstation (1) nach den Ansprüchen 7 und 9,
**dadurch gekennzeichnet, dass**
jedes Wicklungsende jeder ersten Sekundärwicklung (15) mit einer ersten Sechspuls-Brückenschaltung (26.1) eines Stromrichters (4, 5) verbunden ist.

11. Stromrichterstation (1) nach Anspruch 7 und Anspruch 9 oder 10,
**dadurch gekennzeichnet, dass**
ein von einem Sternpunkt (19) der Sternschaltung abgewandtes Wicklungsende jeder zweiten Sekundärwicklung (17) mit einer zweiten Sechspuls-Brückenschaltung (26.2) eines Stromrichters (4, 5) verbunden ist.

## Claims

1. Method for operating a converter station (1) having two line-commutated converters (4, 5) for a power transmission via a bipolar high-voltage DC transmission link (30), **characterized in that**
- the two converters (4, 5) are electrically connected to the same pole (21, 23) of the high-voltage DC transmission link (30) in an antiparallel connection,
- one of the converters (4, 5) is operated as a rectifier on an AC grid (27),
- the other converter (4, 5) is operated as an inverter on the AC grid (27), and
- a station reactive power (Q1) exchanged by the converter station (1) with the AC grid (27) is controlled by means of real power stipulations for converter real powers (P11, P12) exchanged between the converters (4, 5) and the AC grid (27), wherein
- a real power setpoint value of a station real power (P1) exchanged between the converter station (1) and the AC grid (27) is prescribed and the real power stipulations set a difference between the converter real powers (P11, P12) to the real power setpoint value.

2. Method according to Claim 1,
**characterized in that**
a reactive power setpoint value for the station reactive power (Q1) is prescribed and a sum of converter reactive powers (Q11, Q12) exchanged by the converters (4, 5) with the AC grid (27) is set to the reactive power setpoint value by means of the real power stipulations.

3. Method according to either of the preceding claims,
**characterized in that**
a sudden reactive power change in the station reactive power (Q1) caused by at least one AC filter (54) at a grid connection (50) of the converter station (1) being connected to or disconnected from the AC grid (27) is reduced by a change in the converter real powers (P11, P12) that counteracts the sudden reactive power change at the time of the at least one AC filter (54) being connected or disconnected.

4. Converter station (1) for a power transmission via a bipolar high-voltage DC transmission link (30), the converter station (1) comprising
- two line-commutated converters (4, 5) that in each case are operable either as a rectifier or as an inverter on an AC grid (27) and electrically connectable to each of the two poles (21, 23) of the high-voltage DC transmission link (30),
**characterized by**
- a control unit (46) configured to control a station reactive power (Q1) exchanged by the converter station (1) with the AC grid (27) by means of real power stipulations for converter real powers (P11, P12) exchanged between the converters (4, 5) and the AC grid (27) when both converters (4, 5) are connected to the same pole (21, 23) of the high-voltage DC transmission link (30) in an antiparallel connection,
- wherein a real power setpoint value of a station real power (P1) exchanged between the converter station (1) and the AC grid (27) is prescribed and the real power stipulations set a difference between the converter real powers (P11, P12) to the real power setpoint value.

5. Converter station (1) according to Claim 4,
**characterized in that**
each converter (4, 5) is connectable to one pole (21, 23) of the high-voltage DC transmission link (30) directly and to the other pole (21, 23) by means of a pole changing switch (38).

6. Converter station (1) according to Claim 4 or 5,
**characterized in that**
the AC grid (27) is a three-phase AC grid.

7. Converter station (1) according to Claim 6,
**characterized in that**
each converter (4, 5) has twelve valve units (7) arranged in a twelve-pulse bridge circuit (26) consisting of two six-pulse bridge circuits (26.1, 26.2).

8. Converter station (1) according to Claim 7,
**characterized in that** each valve unit (7) has at least one thyristor.

9. Converter station (1) according to one of Claims 6 to 8,
**characterized in that**
each converter (4, 5) is connected to the AC grid (27) by a transformer unit (11) that has a primary winding (13), a first secondary winding (15) and a second secondary winding (17) for each phase of the AC grid (27), wherein the primary windings (13) are connected to one another by a star connection, the first secondary windings (15) are connected to one another by a delta connection, and the second secondary windings (17) are connected to one another by a star connection.

10. Converter station (1) according to Claims 7 and 9,
**characterized in that**
each winding end of each first secondary winding (15) is connected to a first six-pulse bridge circuit (26.1) of a converter (4, 5).

11. Converter station (1) according to Claim 7 and Claim 9 or 10,
**characterized in that**
a winding end of each second secondary winding (17) that is averted from a star point (19) of the star connection is connected to a second six-pulse bridge circuit (26.2) of a converter (4, 5).

## Revendications

1. Procédé pour faire fonctionner un poste (1) de convertisseur ayant deux convertisseurs (4, 5) commutés par le réseau pour une voie (30) bipolaire de transport de courant continu sous haute tension,
**caractérisé en ce que**
- on connecte électriquement les deux convertisseurs (4, 5) suivant un montage antiparallèle au même pôle (21, 23) de la voie (30) de transport de courant continu sous haute tension,
- on fait fonctionner l'un des convertisseurs (4, 5) en redresseur sur un réseau (27) de courant alternatif,
- on fait fonctionner l'autre convertisseur (4, 5) en onduleur sur le réseau (27) de courant alternatif et
- on commande une puissance (Q1) réactive échangée par le poste (1) de convertisseur avec le réseau (27) de courant alternatif par des prescriptions des puissances (P11, P12) réactives de convertisseur, qui sont échangées entre les convertisseurs (4, 5) et le réseau (27) de courant alternatif, dans lequel
- on prescrit une valeur de consigne d'une puissance (P1) réactive de poste échangée entre le poste (1) de convertisseur et le réseau (27) de courant alternatif et les prescriptions de puissance réactive règlent à la valeur de consigne de puissance réactive une différence des puissances (P11, P12) réactives de convertisseur.

2. Procédé suivant la revendication 1,
**caractérisé en ce que**
l'on prescrit une valeur de consigne de la puissance (Q1) réactive de poste et par les prescriptions de puissance réactive, on règle une somme des puissances (Q11, Q12) réactives de convertisseur, qui sont échangées par les convertisseurs (4, 5) avec le réseau (27) de courant alternatif.

3. Procédé suivant l'une des revendications précédentes,
**caractérisé en ce que**
l'on réduit un saut de la puissance (Q1) réactive de poste, provoquée par une mise en circuit ou une mise hors circuit d'au moins un filtre (4) de courant alternatif à une borne (50) de réseau du poste (1) de convertisseur au réseau (27) de courant alternatif par une variation, s'opposant au saut de puissance réactive, des puissances (P11, P12) réactives de convertisseur à l'instant de la mise en circuit ou de la mise hors circuit du au moins un filtre (54) de courant alternatif.

4. Poste (1) de convertisseur pour un transport d'électricité par une voie (30) bipolaire de transport de courant continu sous haute tension, le poste (1) de convertisseur comprenant
- deux convertisseurs (4, 5) commutés par le réseau, qui peuvent fonctionner respectivement au choix comme redresseur ou comme onduleur sur un réseau (27) de courant alternatif et qui peuvent être connectés électriquement à chacun des deux pôles (21, 23) de la voie (30) de transport de courant continu sous haute tension,
**caractérisé par**
- une unité (46) de commande, qui est conçue pour commander une puissance (Q1) réactive de poste échangée par le poste (1) de convertisseur avec le réseau (27) de courant alternatif par des prescriptions de puissance (P11, P12) réactives de convertisseur, qui sont échangées entre les convertisseurs (4, 5) et le réseau (27) de courant alternatif, si les deux convertisseurs (4, 5) sont connectés suivant un montage antiparallèle au même pôle (21, 23) de la voie (30) de transport de courant continu sous haute tension,
- dans lequel une valeur de consigne d'une puissance (P1) réactive de poste, échangée entre le poste (1) de convertisseur et le réseau (27) de courant alternatif, est prescrite et les prescriptions de puissance réactive règlent à une valeur de consigne de puissance réactive une différence des puissances (P11, P12) réactives de convertisseur.

5. Poste (1) de convertisseur suivant la revendication 4,
**caractérisé en ce que**
chaque convertisseur (4, 5) est connecté directement un pôle (21, 23) de le voie (30) de transport de courant continu sous haute tension et peut être connecté à l'autre pôle (21, 23) par un inverseur (38) de pôle.

6. Poste (1) de convertisseur suivant la revendication 4 ou 5,
**caractérisé en ce que**
le réseau (27) de courant alternatif est triphasé.

7. Poste (1) de convertisseur suivant la revendication 6,
**caractérisé en ce que**
chaque convertisseur (4, 5) a douze unités (7) de soupapes montées en un circuit (26) à ponts, à douze impulsions, constitué de deux circuits (26.1, 26.2) à pont à six impulsions.

8. Poste (1) de convertisseur suivant la revendication 7,
**caractérisé en ce que**
chaque unité de soupape (7) a au moins un thyristor.

9. Poste (1) de convertisseur suivant l'une des revendications 6 à 8,
**caractérisé en ce que**
chaque convertisseur (4, 5) est connecté au réseau (27) de courant alternatif par une unité (11) de transformateur, qui a pour chaque phase du réseau (27) de courant alternatif un enroulement (13) primaire, un premier enroulement (15) secondaire et un deuxième enroulement (17) secondaire, les enroulements (13) primaires étant reliés entre eux par un circuit en étoile, les premiers enroulements (15) secondaires étant reliés entre eux par un circuit en triangle et les deuxièmes enroulements (17) secondaires étant reliés entre eux par un circuit en étoile.

10. Poste (1) de convertisseur suivant les revendications 7 et 9,
**caractérisé en ce que**
chaque extrémité de chaque premier enroulement (15) secondaire est reliée à un premier circuit (26.1) en pont à six impulsions d'un convertisseur (4, 5).

11. Poste (1) de convertisseur suivant la revendication 7 et la revendication 9 ou 10,
**caractérisé en ce que**
une extrémité, loin du point (19) neutre du circuit en étoile, de chaque deuxième enroulement (17) secondaire est reliée à un deuxième circuit (26.2) en pont à six impulsions d'un convertisseur (4, 5).
